# EUROPÄISCHE PATENTSCHRIFT

(11) **EP 4 089 993 B1**
(45) Veröffentlichungstag und Bekanntmachung des Hinweises auf die Patenterteilung: **10.07.2024**
(21) Anmeldenummer: 22172468.5
(22) Anmeldetag: 10.05.2022
(51) Int. Cl.: H04M 3/436

(54) **TECHNIKEN ZUM IDENTIFIZIEREN VON UNERWÜNSCHTEN ANRUFEN**
TECHNIQUES FOR IDENTIFYING UNDESIRABLE CALLS
TECHNIQUES PERMETTANT D'IDENTIFIER DES APPELS INDÉSIRABLES

(30) Priorität: 11.05.2021 DE 102021112313
(43) Veröffentlichungstag der Anmeldung: 16.11.2022
(73) Patentinhaber: Deutsche Telekom AG, 53113 Bonn (DE)
(72) Erfinder: Minow, Jascha, 64625 Bensheim (DE); El Mallouki, Said, 56329 St. Goar (DE); Platschek, Martin Michael, 12557 Berlin (DE); Nünning, Johannes, Bonn (DE)
(74) Vertreter: Braun-Dullaeus Pannen Emmerling Patent- & Rechtsanwaltspartnerschaft mbB

(56) Entgegenhaltungen:
- US-A1- 2017 134 574
- US-A1- 2017 163 803

## Beschreibung

Die vorliegende Erfindung betrifft das technische Gebiet der Identifizierung von eingehenden Anrufen bei einem Anschlussteilnehmer. Konkret geht es also um Techniken, die Anrufe zu analysieren, zu klassifizieren und einer bestimmten Gruppe, zum Beispiel in eine Gruppe von erwünschten oder unerwünschte Anrufen, zuzuordnen können. Die Erfindung betrifft konkret hierzu ein Verfahren zum Identifizieren unerwünschter Anrufe, sowie ein entsprechendes Kommunikationsnetzwerk und einen Identifizierungsserver.

Betrügerische Telefonanrufe erfreuen sich zunehmender Beliebtheit. Hierbei kommen solch betrügerischen Telefonanrufe unter Umständen auch neuartige Automatisierungsverfahren zugute, die teilweise autonom solche Anrufe durchführen bzw. Menschen bei der Durchführung solche Anrufe unterstützen können. Zusätzlich werden solche Telefonanrufe durch die zunehmende Verbreitung sogenannter Flatratetarife für Betrüger zunehmend lukrativer. Nicht nur alte Menschen, sondern prinzipiell jeder kann hierdurch Opfer von Betrügern werden und unter Umständen hohe Geldsummen verlieren.

Aktuell gibt es bei betrügerischen Telefonanrufen keine effiziente Abwehr, außer dass der Anschlussteilnehmer, also der Angerufene, selbst den Betrugsversuch erkennt. Dies ist allerdings häufig nicht der Fall, eine Folge könne nicht nur finanzielle, sondern auch psychische Schäden sein, da die Person Opfer eines Verbrechens geworden ist. Der inzwischen als Enkeltrick bekannte Versuch sich am Telefon alten Menschen gegenüber als Verwandte auszugeben, der in Not ist und ganz schnell viel Geld von Oma oder Opa braucht, freut sich ebenfalls steigender Beliebtheit bei organisierten Banden.

Generell sind auch andere Anrufe, bei denen es um Verträge jeglicher Art gehen kann, ein beliebtes Mittel Menschen zu betrügen und teilweise hohe Geldbeträge zu erschwindeln.

Die Patentveröffentlichungen US 2017/163803 und US 2017/134574 sind Beispiele für den Stand der Technik.

Der vorliegenden Erfindung liegt daher die Aufgabe zu Grunde, Techniken anzugeben, die es ermöglichen Anschluss Teilnehmer effizient vor betrügerischen Anrufen zu schützen.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt. Erfindungsgemäß ist ein Verfahren zum Identifizieren von unerwünschten Anrufen an ein anruffähiges Endgerät eines Anschlussteilnehmers in einem Kommunikationsnetzwerk nach Anspruch 1 angegeben, wobei das Verfahren die folgenden Schritte umfasst:
- Empfangen von Anruf-Informationsdaten, die den getätigten Anruf charakterisieren, durch einen Identifizierungsserver des Kommunikationsnetzwerks. Bei solchen Anruf-Informationsdaten kann es sich um abgefangene Audiosignale des Anrufs, eine Nummer des anrufenden, Zeitpunkte des Anrufs und/oder Länge des Anrufs handeln. Solche Daten kann der Identifizierungsserver beispielsweise von dem angerufenen Endgerät des Anschlussteilnehmers übermittelt bekommen. Der Identifizierungsserver kann diese Information aber zumindest auch teilweise vermittels der Vermittlungsstelle übertragen bekommen und/oder der Identifizierungsserver kann in einer Kommunikationsverbindung zwischen dem Anrufer und dem Anschlussteilnehmer vorgesehen sein und diese Anruf-Informationsdaten zumindest teilweise eigenständig abfangen, da die Kommunikation quasi durch den Identifizierungsserver "hindurch" geleitet wird. Auf dem Identifizierungsserver ist ein Algorithmus zur Identifikation von unerwünschten Anrufen implementiert, wobei der Algorithmus programmiert ist zumindest eine der folgenden Identifizierungsmethoden auszuführen:
   ∘ eine Anrufmusteranalyse, wobei die Anrufmusteranalyse eingerichtet ist ein über den Endgeräteanschluss bekanntes typisches Anrufmuster mit den Anruf-Informationsdaten zu vergleichen und durch den Vergleich einen unerwünschten Anruf zu identifizieren; wird der Anschlussteilnehmer beispielsweise zu einem Zeitpunkt angerufen zu dem er sonst quasi nie telefoniert, deutet dies auf einen potenziellen unerwünschten Anruf hin;
      und/oder
   ∘ eine Stimmenanalyse, wobei die Stimmenanalyse eingerichtet ist Sprache als Audiosignale aus den Anruf-Informationsdaten zu extrahieren und diese mit den bekannten Sprachprofilen zu vergleichen und durch den Vergleich einen unerwünschten Anruf zu identifizieren; bekannte Stimmprofile von beispielsweise Verwandten des Anschlussteilnehmers können in einer Datenbank hinterlegt werden, zeigt die Stimmanalyse keinerlei Übereinstimmung mit dieser in der Datenbank hinterlegten Stimmen, deutet dies auf einen potenziell unerwünschten Anrufen; eine weitere Möglichkeit ist es Dialekte als Sprachprofil zu hinterlegen. Typischerweise würde ein solcher Dialekt hinterlegt werden, der dem Ort entspricht an dem der Anschluss Teilnehmer wohnt. In der Regel kann davon ausgegangen werden, dass der Anschlussteilnehmer zumeist "erwünscht" von Menschen angerufen wird, die in seiner Nähe wohnen und folglich zumindest Anklänge in ihrer Sprache des ortsüblichen Dialekts aufweisen; weicht der Dialekt der Sprache des Anrufenden zu sehr von dem ortsüblichen oder landesüblichen Dialekt ab, kann dies auf einen unerwünschten Anruf hindeuten; eine Möglichkeit ist auch, dass quasi ein Radius mit einer vorgegebenen Länge, beispielsweise 50 km, um den Ort des Anschlusses herumgezogen wird, wobei sich Dialekte, die sich innerhalb dieses Kreises befinden als potenziell erwünschte Anruf markiert werden; ob ein Anruf bezüglich seines Dialektes zu sehr abweicht kann beispielsweise mittels neuronalen Netzwerken qualifiziert werden, die in einem Eingangstrainingssatz mit den entsprechenden Dialekten und anderen Datensätzen, die diesen Dialekt nicht entsprechen trainiert werden; die entsprechenden Datensätze "als zu dem Dialekt zugehörig" oder "nicht dem Dialekt zugehörig" können sogar von dem Nutzer des Anschlusses selbst markiert werden; auf diese Weise können getätigte Anrufe des Nutzers für das neuronale Netzwerk verwendet werden; die Vorteile dieser Variante sind zum einen, dass der Nutzer des Anschlusses seine bekannten Dialekte in der Regel besser kennt als ein Netzwerkprovider, insbesondere dann, wenn der Nutzer aus seinem ursprünglichen Wohnort umgezogen ist;
      und/oder
   ∘ Kontextanalyse, wobei die Kontextanalyse eingerichtet ist: in einem ersten Schritt Sprache als Audiosignale aus den Anruf-Informationsdaten zu extrahieren; in einem zweiten Schritt die Sprache in Text umzuwandeln; und in einem dritten Schritt den Text kontextabhängig zu analysieren, um einen unerwünschten Anruf zu identifizieren; bei der kontextabhängigen Analyse können insbesondere Schlüsselwörter hinterlegt sein deren Vorkommen auf einen unerwünschten Anruf hindeutet. Solche Schlüsselwörter können beispielsweise sein: Kauf, Vertrag, Geld, Kontodaten, usw. Werden diese o. ä. Schlüsselwörter vereinzelt oder auch noch in einer bestimmten Kombination erkannt, kann dies auf einen unerwünschten Anruf hindeuten. Bei dieser Kontextanalyse können insbesondere auch Wörter, die regional gehäuft vorkommen berücksichtigt werden, um feststellen zu können, ob der Anruf mit einer hohen Wahrscheinlichkeit in der Nähe des Anschlusses getätigt wurde oder insbesondere aus einem fremden Land. Anrufe mit lokaler Nähe sind mit einer geringen Wahrscheinlichkeit keine potenziellen unerwünschten Anrufe;

Das Verfahren ermöglicht also eine automatisierte Erkennung von unerwünschten Anrufen ohne dass der Anschlussteilnehmer, also der Angerufene, aktiv erkennen muss, dass es sich um einen unerwünschten Anruf handelt. Dies ist insbesondere hilfreich, um Senioren effizient vor unerwünschten Anrufen zu schützen. Die drei aufgezählten Analysemethoden, können beliebig miteinander kombiniert werden. Eine Kombination der drei Analysemethoden ermöglicht eine noch zielsicherere Erkennung des unerwünschten Anrufs.

Zweckmäßigerweise stellt der Algorithmus einen unerwünschten Anruf fest (also identifiziert diesen), wenn eine definierte Wahrscheinlichkeitsschwelle überschritten wurde. Dies ermöglicht vorteilhaft, die Sensitivität des Verfahrens zum Erkennen von unerwünschten Anrufen zu justieren und nicht zu viele von eigentlich "erwünschten" Anrufen als "unerwünscht" zu markieren. Insbesondere ist es möglich, für jede der drei Analysemethoden und auch für jede Kombination der drei Analysemethoden eine eigene Wahrscheinlichkeitsschwelle festzulegen.

Bevorzugt werden nach einer Identifizierung eines unerwünschten Anrufs von dem Identifizierungsserver technische Gegenmaßnahmen eingeleitet werden. Eine solche Gegenmaßnahme kann beispielsweise sein, dass während des Telefonats für den Anschlussteilnehmer ein Audiosignal eingespielt wird, das diesen warnt. Ein solches Audiosignal könnte beispielsweise lauten "Achtung, es kann sich um einen unerwünschten Anruf eines Betrügers handeln." Eine weitere mögliche Gegenmaßnahme ist es, den Anruf technisch zu unterbrechen oder gegebenenfalls sogar den Anschluss des Anrufenden zu sperren. Bevorzugt wird eine solche Sperrung des Anschlusses des Anrufenden erst dann vorgenommen, wenn dieser gehäuft, insbesondere innerhalb einer vordefinierten Zeitspanne, als unerwünschter Anrufer identifiziert wird. Dies bietet den Vorteil, dass der Anschlussteilnehmer technisch automatisiert effektiv vor dem unerwünschten Anruf geschützt werden kann. Insbesondere muss der Anschlussteilnehmer hierzu selbst keine Maßnahmen ergreifen.

Bevorzugt wird typisches Anrufmuster mittels "Machine-Learning" von dem Identifizierungsserver erzeugt. Insbesondere Maschine Learning Algorithmen sind sehr effizient in der Lage Muster, also auch typische Anrufmuster, zu erstellen.

Insbesondere können die Anrufe in bestimmte Klassen unterteilt werden. Eine Klasse kann beispielsweise die Tageszeit der eingehenden Anrufe bei dem Anschlussteilnehmer betreffen. So kann ein typisches Anrufmuster eine Klasse für jede Stunde des Tages aufweisen und darin eine durchschnittliche Anzahl von Anrufen zu diesen jeweiligen Stunden festlegen. Fällt der Anruf nun in eine Klasse zu der typischerweise überhaupt keine Anrufe bei dem Anschlussteilnehmer eingehen, kann dies auf einen unerwünschten Anruf hindeuten. Insbesondere kann das typische Anrufmuster regelmäßig neu erzeugt und/oder upgedatet werden.

Es können auch verschiedene Ereignispunkte festgelegt sein, die ein Update des typischen Anrufmusters triggern. Beispielsweise kann ein solches Ereignis, durch einen Vertragswechsel des Kunden festgelegt werden und/oder wenn sich der Anschlussteilnehmer temporär im Ausland befindet. Beide Ereignisse können ein geändertes typisches Anrufmuster zur Folge haben.

Ob sich der Anschlussteilnehmer, insbesondere ein Anschlussteilnehmer eines Mobilfunknetzes, im Ausland befindet kann beispielsweise automatisiert mit Hilfe der GPS Daten seines Endgerätes ausgewertet werden. Befindet sich der Anschlussteilnehmer im Ausland kann das typische Anrufmuster auch dahingehend angepasst werden, dass die Einträge, zu den typischerweise die Anrufe stattfinden entsprechend der Zeitverschiebung in eine andere Klasse des typischen Anrufmusters verschoben werden. Dies soll anhand eines konkreten Beispiels verdeutlicht werden. Ist in dem typischen Anrufmuster eine Klasse der Anzahl der Anrufe von 12-13 Uhr, wobei typischerweise 5 Anrufe innerhalb dieses Zeitfensters stattfinden und befindet sich der Anschlussteilnehmer in einer Zeitzone mit einer Zeitverschiebung von 2 Stunden, so können die 5 Anrufe in die Klasse der Anrufe von 14-15 Uhr verschoben werden.

Vorzugsweise können Abweichungen das typisches Anrufmuster Abweichungen in Form von speziellen Ereignistagen und/oder eine Anrufe White-List berücksichtigen. Beispielsweise kann als Information zu dem typischen Anrufmuster hinterlegt sein, wann der Anschlussteilnehmer Geburtstag hat. Selbstverständlich können aber auch andere Ereignistage, wie etwa Feiertage, hinterlegt werden. An solchen Tagen, insbesondere an einem Geburtstag, ist damit zu rechnen, dass von dem sonst typischen Anrufmuster abgewichen wird. Beispielsweise kann an solchen Tagen die Erkennung von unerwünschten Anrufen selektiv deaktiviert werden oder die entsprechenden Wahrscheinlichkeitsschwellen herabgesenkt werden. Zudem kann berücksichtigt werden, ob die Anrufe, die beispielsweise zu untypischen Zeiten anrufen, aus einer White-List stammen. Bei den Anschlusskennungen aus dieser White-List handelt es sich um Anrufe, bei denen es bekannt ist, dass es sich um "erwünschte" Anrufe für den Anschlussteilnehmer handelt, sodass diese auch wenn sie ansonsten als unerwünschte Anrufe markiert werden würden, trotzdem als "erwünschte" Anrufe gekennzeichnet werden. Bei Anrufen, die als erwünschte Anrufe gekennzeichnet sind, werden jedenfalls keine technischen Gegenmaßnahmen eingeleitet.

In einer Ausgestaltung der Erfindung ist das typisches Anrufmuster auf dem Identifizierungsserver hinterlegt. Dies bietet den Vorteil, dass der Identifizierungsserver effizient den Algorithmus zum Erkennen von unerwünschten Anrufen ausführen kann ohne dass ein zusätzliches Datenaufkommen beim Übertragen der typischen Anrufmuster entsteht.

In einer Ausführungsform werden die Audiosignale, insbesondere im Fall der Kontextanalyse, von einem externen Aufnahmegerät aufgenommen. Hierdurch wird die Möglichkeit einer zusätzlichen Überwachung der Audiosignale auf einem unabhängig technischen Weg ermöglicht. Beispielsweise könnte ein intelligenter Lautsprecher mit seinem Mikrofon das Gespräch aufzeichnen und die Anruf-Informationsdaten an den Identifizierungsserver senden. Dies kann insbesondere dann von Vorteil sein, wenn das Endgerät durch den Betrüger gehackt wurde.

Gemäß einem zweiten Aspekt der Erfindung ist ein Kommunikationsnetzwerk zum Identifizieren von unerwünschten Anrufen an ein anruffähiges Endgerät eines Anschlussteilnehmers in einem Kommunikationsnetzwerk angegeben, wobei das Kommunikationsnetzwerk umfasst:
- ein anruffähiges Endgerät eines Anschlussteilnehmers;
   ∘ also typischerweise ein Telefon, insbesondere ein Smartphone;
- ein Identifizierungsserver;
   ∘ mit einer Rechnereinheit zur Ausführung von Algorithmen;
- Kommunikationsverbindungen zwischen Geräten des Kommunikationsnetzwerks, insbesondere zwischen dem anruffähigen Endgerät und dem Identifizierungsserver;
   ∘ zusätzlich kann auch das anruffähige Endgerät des potentiellen Betrügers, nachstehend als das weitere anruffähige Endgeräte bezeichnet, in das Kommunikationsnetzwerk integriert sein oder vermittels eines weiteren Kommunikationsnetzwerk mit dem Kommunikationsnetzwerk kommunizieren. Der letzte Fall tritt beispielsweise ein, wenn das weitere Endgerät einem anderen Netzwerk Service-Provider zugeordnet ist als das anruffähige Endgerät des Anschlussteilnehmers;
- wobei der Identifizierungsserver zur Durchführung des Verfahrens des vorstehend beschriebenen Verfahrens eingerichtet ist.

Das Kommunikationsnetzwerk ermöglicht also eine automatisierte Erkennung von unerwünschten Anrufen, ohne dass der Anschlussteilnehmer, also der Angerufene, aktiv erkennen muss, dass es sich um einen unerwünschten Anruf handelt

In einer Ausführungsform weist das Kommunikationsnetzwerk eine Unterbrechungseinheit zum Unterbrechen einer selektiven Kommunikationsverbindung auf. Dies bietet den Vorteil, dass gezielt eine Kommunikationsverbindung, die einem potentiellen Betrüger zugeordnet ist, unterbrochen werden kann, um die anderen Anschlussteilnehmer effektiv vor diesem zu schützen.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:

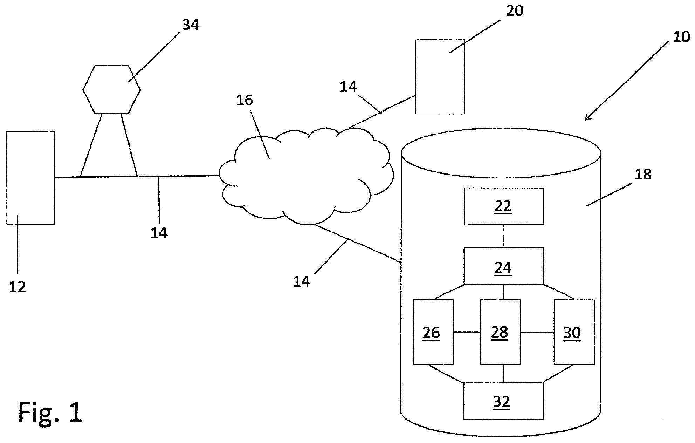

- Fig. 1:: zeigt ein erfindungsgemäßes Kommunikationsnetzwerk zum Erkennen von unerwünschten Anrufen.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Fig. 1 zeigt ein Kommunikationsnetzwerk 10 zum Erkennen von unerwünschten Anrufen.

Das Kommunikationsnetzwerk 10 weist auf: ein Endgerät 12 eines Anschlussteilnehmers, wobei das Endgerät 12 über Kommunikationsverbindungen 14 mit eine Schnittstelle 16 des Kommunikationsnetzwerk 10 verbunden ist. Diese Schnittstelle 16 des Kommunikationsnetzwerk 10 kann insbesondere von einer Vermittlungsstelle 16 ausgebildet sein. Ein Identifizierungsserver 18 kann ebenfalls in der Vermittlungsstelle 16 vorgesehen sein oder aber steht zumindest über eine Kommunikationsverbindung 14 in Kommunikationsverbindung der Vermittlungsschnittstelle 16.der Identifizierungsserver 18 kann auch so vorgesehen sein, dass er in eine Kommunikationsverbindung 14 zwischen dem Endgerät 12 und dem weiteren Endgerät 20 eines potentiellen Betrügers vorgesehen ist. Bei einer solchen Anordnung kann der Identifizierungsserver 18 besonders effizient an Anruf-Informationsdaten zwischen dem Endgerät 12 und im weitere Endgerät 20 abfangen.

Auf dem Identifizierungsserver 18 ist ein Algorithmus zum Erkennen von unerwünschten Anrufen implementiert.

Der Identifizierungsserver 18 empfängt in Schritt 24 Anruf-Informationsdaten und kann diese im Hinblick auf einen unerwünschten Anruf auswerten. Diese Anruf-Informationsdaten können direkt durch eine Anfrage des Anrufs durch das weitere Endgerät erzeugt werden. Anruf-Informationsdaten können aber beispielsweise auch von dem Endgerät 12 an den Identifizierungsserver 18 übertragen werden. Typischerweise wird in dem letzteren Fall zunächst Schritt 22 stattfinden:
Schritt 22: Durchstellen des Anrufs des weiteren Endgeräts 20 an den Anschlussteilnehmer vermittels des Kommunikationsnetzwerks 10 an das Endgerät 12 des Anschlussteilnehmers; ein Anrufer wählt also typischerweise die Nummer des Anschlussteilnehmers und wird durch die Vermittlungsstelle 16 des Kommunikationsnetzwerks 10 an den Anschlussteilnehmer weitergeleitet. Insbesondere kann der Identifizierungsserver 18 in der Vermittlungsstelle 16 vorgesehen sein oder mit dieser Vermittlungsstelle 16 in einer Kommunikationsverbindung 14 stehen; das Durchstellen des Anrufs ist allerdings ein optionaler erster Schritt, da unerwünschte Anrufe auch schon identifiziert werden können - wie nachstehend erläutert wird - ohne dass der Anruf notwendigerweise zunächst durchgestellt wird.

Nachdem also die Anruf-Informationsdaten in Schritt 24 empfangen wurden, werden diese von dem Algorithmus entweder an eine oder an mehrere Identifizierungsmethoden übergeben. Hierzu wendet der Algorithmus zumindest die drei folgenden Identifizierungsmethoden, die sich insbesondere auf beliebige Weise miteinander kombinieren lassen, an:
- eine Anrufmusteranalyse 26: hierbei findet eine Analyse und Überwachung des Telefonieverhaltens des angerufenen Anschlussteilnehmers, respektive seines Endgeräts 12 statt. Mittels Machine Learning Verfahren wird das typische Anrufverhalten des Anschlussteilnehmers über die Zeit hinweg erlernt und kann als typisches Anrufmuster hinterlegt werden. Bei Abweichungen zu diesem typischen Anrufmuster, wie zum Beispiel einem hohen Anrufvolumen innerhalb eines kurzen Zeitraums, ungewöhnlichen Gesprächslängen oder ausgehenden Anrufen direkt nach eingehenden Anrufen, wird diese Abweichung als eine Anomalie erkannt, die auf einen möglichen unerwünschten Anruf hindeutet. Gegebenenfalls können entsprechende technische Abwehrmaßnahmen eingeleitet werden.

- eine Stimmanalyse 28: durch einen Einsatz von Stimmerkennungsalgorithmen kann festgestellt werden, ob es sich bei dem Anrufer um eine dem Anschlussteilnehmer bekannte Person handelt, zum Beispiel ein Familienangehöriger oder jemand aus dem Bekanntenkreis ist. Dies hilft effektiv, Betrüger, die sich als Familienangehörige ausgeben, zu erkennen. Gegebenenfalls können entsprechende technische Abwehrmaßnahmen eingeleitet werden.
- Kontextanalyse 30: hierbei wird das Gespräch zwischen dem Anrufer und dem Angerufenem zunächst abgehört und dann in einem weiteren Schritt transkribiert. Sowohl aus den Worten die der Anrufer als auch der Angerufene gesprochen haben, können verdächtige Worte und Begriffe extrahiert werden, die auf einen Betrugsversuch durch den Anrufer hinweisen. Wird dies erkannt, kann sowohl der Angerufene und/oder sogar dessen Angehörige automatisiert durch technische Gegenmaßnahmen gewarnt werden. Das Mithören, insbesondere der Antworten des Anschlussteilnehmers, kann hierbei mithilfe eines Aufnahmegeräts 34, beispielsweise eines Smart Speakers 34, vorgenommen werden. Der Smart Speaker 34 kann die aufgenommenen Audiosignale als Anruf-Informationsdaten über die Kommunikationsverbindung 14 an den Identifizierungsserver 18 senden. Das Aufnahmegerät 34 kann auch als ein Gerät ausgebildet sein, das zwischen Telefondose und dem Endgerät 12 des Anschlussteilnehmers geschaltet wird und hierbei die Audiodaten direkt abgreift. Eine weitere Möglichkeit ist es, dass eine App auf dem Endgerät 12 des Nutzers die Audiosignale extrahiert und dann als Anruf-Informationsdaten an den Identifizierungsserver 18 sendet.

Wird durch den Algorithmus festgestellt, dass es sich mit einer Wahrscheinlichkeit, die über einer vordefinierten Schwelle liegt, um einen unerwünschten Anruf handelt, können entsprechende Gegenmaßnahmen 32 eingeleitet werden.

Die Erfindung gemäß Verfahren ermöglicht es also Anschlussteilnehmer effektiv vor unerwünschten Anrufen zu warnen und zu schützen.

## Patentansprüche

1. Verfahren zum Identifizieren von unerwünschten Anrufen an ein anruffähiges Endgerät (12) eines Anschlussteilnehmers in einem Kommunikationsnetzwerk, umfassend die folgenden Schritte:
• Empfangen von Anruf-Informationsdaten, die den getätigten Anruf charakterisieren, durch einen Identifizierungsserver (18) des Kommunikationsnetzwerks (10), wobei auf dem Identifizierungsserver ein Algorithmus zur Identifizierung von unerwünschten Anrufen implementiert ist, wobei der Algorithmus programmiert ist zumindest eine der folgenden Identifizierungsmethoden auszuführen:
∘ eine Anrufmusteranalyse (26), wobei die Anrufmusteranalyse eingerichtet ist ein über das Endgerät bekanntes typisches Anrufmuster mit den Anruf-Informationsdaten zu vergleichen und durch den Vergleich einen unerwünschten Anruf zu identifizieren;
∘ eine Stimmenanalyse (28), wobei die Stimmenanalyse eingerichtet ist Sprache als Audiosignale aus den Anruf-Informationsdaten zu extrahieren und diese mit den bekannten Sprachprofilen zu vergleichen und durch den Vergleich einen unerwünschten Anruf zu identifizieren;
∘ Kontextanalyse (30), wobei die Kontextanalyse eingerichtet ist: in einem ersten Schritt Sprache als Audiosignale aus den Anruf-Informationsdaten zu extrahieren; in einem zweiten Schritt die Sprache in Text umzuwandeln; und in einem dritten Schritt den Text kontextabhängig zu analysieren, um einen unerwünschten Anruf zu identifizieren,
**dadurch gekennzeichnet,**
**dass** folgende Kombinationen ausgeführt werden: i) die Anrufmusteranalyse (26) und die Stimmenanalyse (28), oder ii) die Anrufmusteranalyse (26) und die Kontextanalyse (30), oder iii) die Stimmenanalyse (28) und die Kontextanalyse (30), oder iv) die Anrufmusteranalyse (26) und die Stimmenanalyse (28) und die Kontextanalyse, wobei der Algorithmus einen unerwünschten Anruf feststellt, wenn eine definierte Wahrscheinlichkeitsschwelle überschritten wurde, wobei für jede der Analysemethoden und auch für die ausgeführten Kombinationen eigene Wahrscheinlichkeitswerte festgelegt werden.

2. Verfahren nach einem der vorhergehenden Ansprüche, **dadurch gekennzeichnet, dass** nach einer Identifizierung eines unerwünschten Anrufs von dem Identifizierungsserver technische Gegenmaßnahmen eingeleitet werden.

3. Verfahren nach einem der vorhergehenden Ansprüche, **dadurch gekennzeichnet, dass** das typisches Anrufmuster mittels "Machine-Learning" von dem Identifizierungsserver erzeugt wird.

4. Verfahren nach Anspruch 3, **dadurch gekennzeichnet, dass** das typisches Anrufmuster Abweichungen in Form von speziellen Ereignistagen und/oder eine Anrufe White-List berücksichtigt.

5. Verfahren nach einem der Ansprüche 3 bis 4, **dadurch gekennzeichnet, dass** das typische Anrufmuster auf dem Identifizierungsserver hinterlegt ist.

6. Verfahren nach einem der vorhergehenden Ansprüche, **dadurch gekennzeichnet, dass** die Audiosignale, insbesondere im Falle der Kontextanalyse, von einem externen Aufnahmegerät aufgenommen werden.

7. Identifizierungsserver zum Identifizieren von unerwünschten Anrufen eingerichtet die Schritte des Verfahrens nach einem der Ansprüche 1 - 6 auszuführen.

8. Kommunikationsnetzwerk zum Identifizieren von unerwünschten Anrufen an ein anruffähiges Endgerät eines Anschlussteilnehmers in einem Kommunikationsnetzwerk (10), umfassend:
• ein anruffähiges Endgerät (12) eines Anschlussteilnehmers;
• ein Identifizierungsserver (18);
• Kommunikationsverbindungen (14) zwischen Geräten des Kommunikationsnetzwerks, insbesondere zwischen dem anruffähigen Endgerät und dem Identifizierungsserver;
**dadurch gekennzeichnet,**
**dass** der Identifizierungsserver zur Durchführung des Verfahrens nach Anspruch 7 eingerichtet ist.

9. Kommunikationsnetzwerk nach Anspruch 8, **dadurch gekennzeichnet, dass** das Kommunikationsnetzwerk eine Unterbrechungseinheit zum Unterbrechen einer selektiven Kommunikationsverbindung aufweist.

## Claims

1. A method for identifying undesirable calls to a call-enabled terminal (12) of a subscriber in a communication network, comprising the following steps:
• receiving call information data that characterizes the activated call, by means of an identification server (18) of the communication network (10), wherein an algorithm for identifying undesirable calls is implemented on the identification server, wherein the algorithm is programmed to perform at least one of the following identification methods:
∘ a call pattern analysis (26), wherein the call pattern analysis is configured to compare a typical call pattern known from the terminal with the call information data and to identify an undesirable call from the comparison;
∘ a voice analysis (28), wherein the voice analysis is configured to extract speech as audio signals from the call information data and compare them with the known speech profiles and to identify an undesirable call from the comparison;
∘ context analysis (30), wherein the context analysis is configured: to extract speech as audio signals from the call information data in a first step; to convert the speech into text in a second step; and, in a third step, to analyse the text in a context-dependent manner to identify an undesirable call,
**characterized in that**
the following combinations are implemented: i) the call pattern analysis (26) and the voice analysis (28); or ii) the call pattern analysis (26) and the context analysis (30), or iii) the voice analysis (28) and the context analysis (30), or iv) the call pattern analysis (26) and the voice analysis (28) and the context analysis, wherein the algorithm detects an undesirable call if a defined probability threshold has been exceeded, wherein each of the analysis methods and the implemented combinations have their own specified probability values.

2. The method according to any of the preceding claims, **characterized in that** technical countermeasures are initiated by the identification server after an undesirable call has been identified.

3. The method according to any of the preceding claims, **characterized in that** the typical call pattern is generated by the identification server using machine learning.

4. The method according to Claim 3, **characterized in that** the typical call pattern takes into account deviations in form of special event days and/or a call white list.

5. The method according to either of Claims 3 or 4, **characterized in that** the typical call pattern is stored on the identification server.

6. The method according to any of the preceding claims, **characterized in that** the audio signals, in particular in the case of the context analysis, are recorded by an external recording device.

7. An identification server for identifying undesirable calls, configured to perform the steps of the method according to any one of Claims 1 - 6.

8. A communication network for identifying undesirable calls to a call-enabled terminal of a subscriber in a communication network (10), comprising:
• a call-enabled terminal (12) of a subscriber;
• an identification server (18);
• communication links (14) between devices of the communication network, in particular between the call-enabled terminal and the identification server;
**characterized in that**
the identification server is configured for carrying out the method according to Claim 7.

9. The communication network according to Claim 8, **characterized in that** the communication network has an interruption unit for interrupting a selective communication link.

## Revendications

1. Procédé d'identification d'appels indésirables vers un terminal capable d'appeler (12) d'un abonné dans un réseau de communication, comprenant les étapes suivantes de :
• réception de données d'information d'appel caractérisant l'appel effectué par un serveur d'identification (18) du réseau de communication (10), dans lequel un algorithme d'identification des appels indésirables est mis en œuvre sur le serveur d'identification, dans lequel l'algorithme est programmé pour exécuter au moins un des procédés d'identification suivants :
∘ une analyse de modèle d'appel (26), dans lequel l'analyse de modèle d'appel étant configurée pour comparer un modèle d'appel typique connu via le terminal avec les données d'informations d'appel et pour identifier un appel indésirable grâce à la comparaison ;
∘ une analyse vocale (28), dans lequel l'analyse vocale est configurée pour extraire la parole sous forme de signaux audio à partir des données d'informations d'appel et pour les comparer avec les profils vocaux connus et pour identifier un appel indésirable grâce à la comparaison ;
∘ une analyse contextuelle (30), dans lequel l'analyse contextuelle est configurée pour dans une première étape extraire la voix sous forme de signaux audio à partir des données d'informations d'appel ; dans une deuxième étape, convertir le discours en texte ; et dans une troisième étape, analyser contextuellement le texte pour identifier un appel indésirable,
**caractérisé en ce que**
les combinaisons suivantes sont effectuées : i) l'analyse du modèle d'appel (26) et l'analyse vocale (28), ou ii) l'analyse du modèle d'appel (26) et l'analyse contextuelle (30), ou iii) l'analyse vocale (28) et l'analyse contextuelle (30), ou iv) l'analyse du modèle d'appel (26) et l'analyse vocale (28) et l'analyse contextuelle, moyennant quoi l'algorithme détecte un appel indésirable lorsqu'un seuil de probabilité défini est dépassé, dans lequel pour chacune des méthodes d'analyse ainsi que pour les combinaisons effectuées des valeurs de probabilité propres sont définies.

2. Procédé selon une des revendications précédentes, **caractérisé en ce qu'**après l'identification d'un appel indésirable, des contre-mesures techniques sont initiées par le serveur d'identification.

3. Procédé selon une des revendications précédentes, **caractérisé en ce que** le modèle d'appel typique est déterminé au moyen de « l'apprentissage automatique » par le serveur d'identification.

4. Procédé selon la revendication 3, **caractérisé en ce que** les écarts par rapport au modèle d'appel type sont pris en compte sous forme de jours d'événements spéciaux et/ou d'une liste blanche d'appels.

5. Procédé selon une des revendications 3 à 4, **caractérisé en ce que** les modèles d'appel typiques sont mémorisés sur le serveur d'identification.

6. Procédé selon une des revendications précédentes, **caractérisé en ce que** les signaux audio, notamment dans le cas de l'analyse contextuelle, proviennent d'un appareil d'enregistrement externe.

7. Serveur d'identification pour identifier les appels indésirables configuré pour exécuter les étapes du procédé selon une des revendications 1-6.

8. Réseau de communication pour identifier les appels indésirables vers un terminal capable d'appeler d'un abonné dans un réseau de communications (10), comprenant :
• un terminal capable d'appeler (12) d'un abonné ;
• un serveur d'identification (18) ;
• des liaisons de communication (14) entre les appareils du réseau de communication, notamment entre le terminal appelant et le serveur d'identification ;
**caractérisé en ce que** le serveur d'identification est configuré pour exécuter la procédure selon la revendication 7.

9. Réseau de communication selon la revendication 8, **caractérisé en ce que** le réseau de communication présente une unité d'interruption permettant d'interrompre une connexion de communication sélective.
